(19) Europäisches Patentamt
European Patent Office
Office européen des brevets

(11) Veröffentlichungsnummer: **0 060 430**
**B1**

(12) **EUROPÄISCHE PATENTSCHRIFT**

(45) Veröffentlichungstag der Patentschrift: **18.12.85**

(51) Int. Cl.⁴: **C 08 G 85/00**, C 08 G 18/48, B 01 F 17/00

(21) Anmeldenummer: **82101541.9**

(22) Anmeldetag: **27.02.82**

(54) **Verfahren zur Herstellung von Polymerisaten mit seitenständig gebundenen Polyalkylenoxidketten.**

(30) Priorität: **13.03.81 DE 3109700**
**13.03.81 DE 3109699**

(43) Veröffentlichungstag der Anmeldung: **22.09.82 Patentblatt 82/38**

(45) Bekanntmachung des Hinweises auf die Patenterteilung: **18.12.85 Patentblatt 85/51**

(84) Benannte Vertragsstaaten: **AT BE CH DE FR GB IT LI NL SE**

(56) Entgegenhaltungen:
**EP - A - 0 042 505**
**EP - A - 0 043 966**
**DE - A - 2 136 572**
**DE - A - 2 831 302**
**DE - C - 537 587**
**GB - A - 1 126 094**
**US - A - 3 684 768**

**Die Akte enthält technische Angaben, die nach dem Eingang der Anmeldung eingereicht wurden und die nicht in dieser Patentschrift enthalten sind.**

(73) Patentinhaber: **Th. Goldschmidt AG, Goldschmidtstrasse 100 Postfach 101461, D-4300 Essen 1 (DE)**

(72) Erfinder: **Fock, Jürgen, Dr., Mörsenbroicher Weg 114, D-4000 Düsseldorf 30 (DE)**

**EP 0 060 430 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Polymerisaten mit seitenständig gebundenen Polyalkylenoxidketten.

Verbindungen mit seitenständig gebundenen Polyalkylenoxidketten zeichnen sich durch besondere grenzflächenaktive Eigenschaften aus. Derartige Verbindungen mit seitenständigen Hydroxylgruppen sind beispielsweise aus der DE-PS 2 555 053 bekannt. Eine weitere auffallende Eigenschaft dieser Verbindungen ist ihre, bezogen auf das Molekulargewicht, relativ niedrige Viskosität.

Derartige Verbindungen können sowohl zur Stabilisierung als auch zur Zerstörung von Schäumen verwendet werden. Sie können ferner zum Stabilisieren oder Destabilisieren von Emulsionen oder Dispersionen verwendet werden. Dabei ist es dem Fachmann bekannt, dass, je nach den Verhältnissen der hydrophilen und hydrophoben Anteile und dem sich daraus ergebenden HLB-Wert, eine grenzflächenaktive Verbindung stabilisierend oder destabilisierend auf ein System wirken kann.

Man kann auf sehr einfache Art zu Polymerisaten mit seitenständig gebundenen Polyalkylenoxidketten gelangen, wenn man als Ausgangsverbindungen solche verwendet, die am Startalkohol mindestens zwei freie Hydroxylgruppen aufweisen. Diese Ausgangsverbindungen sind nach einem zum Stand der Technik gehörenden Verfahren (DE-OS 3 025 807) erhältlich.

Dieses in der DE-OS 3 025 807 beschriebene Verfahren betrifft die Herstellung von Polyethern unter Erhalt von mindestens zwei freien Hydroxylgruppen am Startalkohol, wobei die Hydroxylgruppen durch höchstens drei Kohlenstoffatome voneinander getrennt sind und wobei die Hydroxylgruppe am Polyetherkettenende, gegebenenfalls reversibel, blockiert, jedoch gegenüber den Bedingungen der Acetal- oder Ketalspaltung stabil ist, und ist dadurch gekennzeichnet, dass man

a) ein Oxiran der Formel

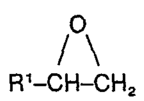

worin

$R^1$ ein Wasserstoffrest oder eine, gegebenenfalls halogenierte, Kohlenwasserstoffgruppe mit 1 bis 30 Kohlenstoffatomen oder die Gruppe $-CH_2OR^2$, in der $R^2$ eine Alkyl- oder Alkenylgruppe bedeutet, und wobei innerhalb des polymeren Moleküls die Gruppe $R^1$ gleich oder verschieden ist, an einen drei- oder mehrwertigen Alkohol, bei dem mindestens zwei Hydroxylgruppen acetalisiert oder ketalisiert sind, anlagert,

b) die Hydroxylgruppe des erhaltenen Polyethermonools durch Umsetzung mit einer in bezug auf diese Hydroxylgruppe reaktiven Gruppe einer monofunktionellen Verbindung, welche gegenüber den Bedingungen der Acetal- oder Ketalspaltung stabil ist, blockiert und dann

c) das Acetal oder Ketal durch Einwirkung von Säure spaltet.

Als Startalkohol ist insbesondere das 2,2-Dimethyl-1,3-dioxolan-4-methanol bevorzugt. Weitere Beispiele von Startalkoholen sind 2,2-Dimethyl-5-hydroxymethyl-5-ethyl-1,3-dioxan und 2,2-Dimethyl-5,5-dihydroxymethyl-1,3-dioxan.

Die Anlagerung des Oxirans an die Startalkohole erfolgt in an sich bekannter Weise mit Katalysatoren, welche den Acetal- oder Ketalring nicht aufspalten. Nach Anlagerung der gewünschten Oxiranmenge und Erreichen des geforderten Molekulargewichtes wird die am Polyetherkettenende befindliche Hydroxylgruppe blockiert. Diese Blockierung kann derart erfolgen, dass, falls erwünscht, die Schutzgruppe wieder angespalten werden kann. Nach der Blockierung der Hydroxylgruppe wird dann das Acetal oder Ketal aufgespalten, wobei die freien Hydroxylgruppen am Startalkohol rückgebildet werden.

Man erhält nach diesem Verfahren z.B. Verbindungen der allgemeinen Formel

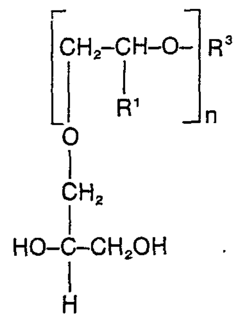

I

wobei

$R^1$ ein Wasserstoffrest oder eine, gegebenenfalls halogenierte, Kohlenwasserstoffgruppe mit 1 bis 30 Kohlenstoffatomen oder die Gruppe $-CH_2OR^2$, in der $R^2$ eine Alkyl- oder Alkenylgruppe bedeutet, und wobei innerhalb des polymeren Moleküls die Gruppe $R^1$ gleich oder verschieden ist,

$R^3$ eine, gegebenenfalls wieder abspaltbare, Schutzgruppe und

n eine ganze Zahl $> 1$ ist.

Die Gruppe $R^1$ kann ein Wasserstoffrest sein. Es handelt sich dann bei dem Oxiran um Ethylenoxid. Die Gruppe $R^1$ kann eine Alkylgruppe mit 1 bis 30 Kohlenstoffatomen sein. Bevorzugt ist $R^1$ eine Alkylgruppe mit 1 bis 4, insbesondere 1 bis 2 Kohlenstoffatomen. Ist $R^1$ eine Methylgruppe, handelt es sich um Propylenoxid. Die Alkylgruppe kann gegebenenfalls halogeniert sein und z.B. Chlorreste aufweisen. Beispiel einer solchen halogenierten Gruppe $R^1$ ist die $CH_2Cl$-Gruppe. Die Alkylgruppe kann auch ungesättigt sein. Beispiel einer solchen ungesättigten Alkylgruppe ist die Vinyl- oder Allylgruppe.

Die Gruppe $R^1$ kann auch eine Phenylgruppe, die gegebenenfalls substituiert ist, sein. Im einfachsten Falle handelt es sich bei dem Oxiran dann um Styroloxid.

Die Gruppe $R^1$ kann auch die Bedeutung der Gruppe $-CH_2-O-R^2$ haben, wobei $R^2$ eine Alkyl-

oder Alkenylgruppe ist. Beispiel einer geeigneten Alkylgruppe ist die Butylgruppe; Beispiel einer geeigneten Alkenylgruppe ist die Vinyl- oder Allylgruppe.

Innerhalb des polymeren Moleküls kann die Bedeutung der Gruppe $R^1$ gleich oder verschieden sein. Der Polyether kann somit z.B. ganz oder teilweise aus Oxyethyleneinheiten aufgebaut sein. Von Interesse sind ferner Verbindungen, bei denen das Polymerisat aus Oxyethylen- und Oxypropyleneinheiten aufgebaut ist, bei denen die Einheiten statistisch oder in Blöcken im Molekül angeordnet sein können. Es sind aber auch alle anderen Kombinationen denkbar und möglich und werden im wesentlichen von den Eigenschaften bestimmt, die das herzustellende Polymerisat aufweisen soll.

$R^3$ ist eine, gegebenenfalls wieder abspaltbare, Schutzgruppe. Dies wird dadurch eingeführt, dass man vor der Acetal- oder Ketalspaltung die endständige Hydroxylgruppe mit einer Verbindung umsetzt, welche monofunktionell ist und eine gegenüber der Hydroxylgruppe reaktive Gruppe aufweist. Dabei kann die Reaktion durch Substitution oder Addition erfolgen. Beispiel einer Substitutionsreaktion ist die Umsetzung der Hydroxylgruppe mit einem Alkylhalogenid, z.B. Methylchlorid, oder einem Alkylarylhalogenid, z.B. Benzylchlorid, wobei der Kohlenwasserstoffrest 1 bis 12 Kohlenstoffatome aufweisen kann. Beispiel einer geeigneten Additionsreaktion ist die Umsetzung der Hydroxylgruppe des Polyethers mit einem organischen Monoisocyanat, z.B. einem Alkyl- oder Arylmonoisocyanat, oder einer Vinylverbindung, z.B. Acrylnitril, Acrylsäuremethylester oder Methylvinylketon.

Die Blockierung der freien Hydroxylgruppe an dem dem Startalkohol abgewandten Polyetherkettenende kann jedoch auch unter solchen Umständen erfolgen, dass, falls erwünscht, die Schutzgruppe wieder abgespalten werden kann. So ist es z.B. möglich, die Hydroxylgruppe mit einer organischen Monocarbonsäure oder einem Säurechlorid zu verestern. Entsprechende Veresterungen sind auch mit anderen Säuren, z.B. der Sulfonsäure, möglich. Nach der Spaltung der Ketal- oder Acetalgruppe und nach der Polymerisation des entstandenen 1,2- oder 1,3-Diols lässt sich die endblockierende Estergruppe durch Verseifung abspalten.

Ein weiteres, nach dem eingangs genannten Verfahren herstellbares Polymerisat, das sich vom 2,2-Dimethyl-5-hydroxymethyl-5-ethyl-1,3-dioxan ableitet, entspricht der Formel

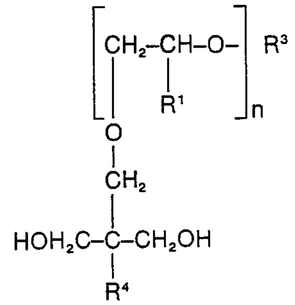

II

wobei $R^4$ ein Ethylrest ist. $R^4$ kann aber auch ein Wasserstoffrest oder eine andere Alkylgruppe mit insbesondere bis zu 4 Kohlenstoffatomen oder eine Arylgruppe, insbesondere die Phenylgruppe sein. Diese Ausgangsverbindungen bilden 1,3-Diole mit zwei primären Hydroxylgruppen.

Ein vom Pentaerythrit abgeleitetes Verfahrensprodukt lässt sich durch die allgemeine Formel

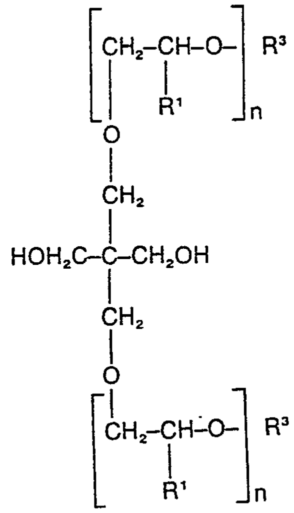

III

beschreiben.

Die Indices $R^1$, $R^3$ und n haben dabei die gleiche Bedeutung wie bei der vorher genannten Formel.

Diese Verbindungen stellen die Ausgangsprodukte für das erfindungsgemässe Verfahren dar, dem die Aufgabe zugrunde liegt, auf einfache Weise Polymerisate mit seitenständig gebundenen Polyalkylenoxidketten herzustellen, welche ausgeprägte grenzflächenaktive Eigenschaften aufweisen.

Das erfindungsgemässe Verfahren ist dadurch gekennzeichnet, dass man Polyalkylenoxide mit mindestens zwei freien Hydroxylgruppen am Startalkohol, wobei die Hydroxylgruppen durch höchstens drei Kohlenstoffatome voneinander getrennt sind und wobei die am abgewendeten Ende der Polyalkylenoxidkette befindliche Hydroxylgruppe, gegebenenfalls reversibel, blockiert ist, mit organischen Diisocyanaten umsetzt.

Die Kettenlänge der erfindungsgemäss herstellbaren Polymerisate lässt sich in einfacher Weise durch Einstellung des Molverhältnisses der Reaktionspartner bestimmen. Bei einem Molverhältnis von einem Mol Polyalkylenoxid-1,2-diol bzw. -1,3-diol zu einem Mol organischer Diisocyanate entstehen langkettige Kammpolymere. Verwendet man geringere Anteile eines der beiden Reaktionspartner, verkürzt sich die Kettenlänge des Polymerisates in entsprechender Weise, wobei die reaktiven Gruppen des im Überschuss vorliegenden Reaktionspartners dann die endbegrenzenden Gruppen bilden. Diese Endgruppen, die entweder Hydroxyl- oder Isocyanatgruppen sind, können gegebenenfalls in an sich bekannter Weise blockiert werden. Hydroxylgruppen können z.B. mit einwertigen Isocyanaten, Säurechloriden,

Säureanhydriden oder Kohlenwasserstoffhalogeniden blockiert werden. Die endständigen Isocyanatgruppen können in einfacher Weise durch einwertige Alkohole blockiert werden.

Es ist auch möglich, 1,2-Diole und/oder 1,3-Diole mit unterschiedlichen Polyalkylenoxidketten als Gemisch oder nacheinander mit den reaktiven polyfunktionellen Verbindungen umzusetzen. Man erhält dann entweder Polymere mit statistischer Verteilung der Polyalkylenoxidketten entsprechend den anteiligen Mengen der eingesetzten 1,2- oder 1,3-Diole oder Polymerisate mit Blöcken jeweils gleicher Polyalkylenoxidketten.

Für das erfindungsgemässe Verfahren sind als Polyalkylenoxide mit mindestens zwei Hydroxylgruppen die bereits gezeigten Verbindungen der allgemeinen Formeln I, II und III bevorzugt.

Die Ausgangsverbindungen der Formeln II und III haben den Vorteil, dass beide freie Hydroxylgruppen als primäre Hydroxylgruppen vorliegen. Man kann deshalb von einer gleichen Reaktivität beider Hydroxylgruppen ausgehen, was die Ausbildung langkettiger Polymerisate besonders begünstigt.

Beispiele geeigneter Diisocyanate sind 2,4- und 2,6-Toluylendiisocyanat sowie Gemische dieser Isocyanate, Diphenylmethan-4,4'-diisocyanat; 1,3- und 1,4-Phenylendiisocyanat; Naphthylen-1,5-diisocyanat; 1,4-Tetramethylendiisocyanat; 1,6-Hexamethylendiisocyanat; Cyclohexan-1,3- und 1,4-diisocyanat; iso-Phorondiisocyanat; Umsetzungsprodukte von Trimethylolpropan mit Toluylendiisocyanat oder mit iso-Phorondiisocyanat; Umsetzungsprodukte von Hexamethylen- 1,6-diisocyanat und Wasser.

Es ist möglich, an sich bekannte Präpolymere, z.B. Polyether- oder Polyesterpräpolymere mit zwei endständigen Isocyanatgruppen, zu verwenden. Hierdurch werden die Polyalkylenoxidketten in stärkerem Masse voneinander getrennt, und es lassen sich hierdurch in einfacher Weise die Eigenschaften der entstehenden Kammpolymere beeinflussen.

Bei den vorgenannten Verfahrensweisen entstehen Verbindungen, welche zum Beispiel die folgende Formel aufweisen können:

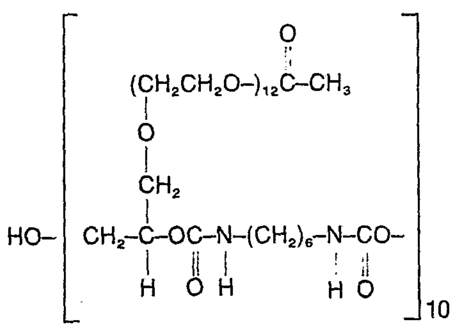

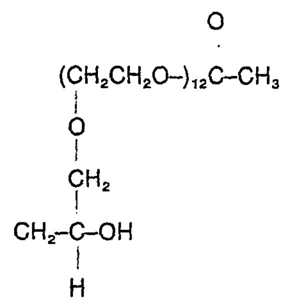

Die chemischen und physikalischen Eigenschaften der nach dem erfindungsgemässen Verfahren herzustellenden Verbindungen lassen sich noch dadurch variieren und beeinflussen, dass man einen Teil der Polyalkylenoxide mit mindestens zwei Hydroxylgruppen am Startalkohol durch in bezug auf die Hydroxylgruppen äquivalente Mengen an di- oder polyfunktionellen Alkoholen, wie z.B. Ethylglykol, Propandiol-1,2, Propandiol-1,3, Butandiol-1,4, Hexandiol-1,6, Dihydroxymethylphenylen, Glycerin, Trimethylolpropan, Pentaerythrit, ersetzt. Dieser Austausch der Polyalkylenoxidderivate soll aber 90 Mol-% nicht überschreiten.

Durch den vorgenannten teilweisen Ersatz der Polyalkylenoxidketten durch zwei- oder mehrwertige Alkohole lässt sich das hydrophile/hydrophobe Gleichgewicht der Verbindungen beeinflussen, wobei es dem Fachmann selbstverständlich ist, dass eine weitere Beeinflussungsmöglichkeit durch Molgewicht und Zusammensetzung der Polyalkylenoxidketten möglich ist.

Es hat sich weiter gezeigt, dass sich das erfindungsgemässe Verfahren mit noch besseren Ausbeuten und übersichtlicher durchführen lässt, wenn man es in mehreren Stufen mit unterschiedlichen Molverhältnissen der Reaktionspartner durchführt. Man erhält dabei Polymerisate, deren analytisch bestimmtes Molgewicht dem theoretisch errechenbaren Molgewicht besser als beim einstufigen Verfahren entspricht. Man kann durch die mehrstufige Verfahrensweise auch Polymerisate mit von einander verschiedenen Seitenketten, z.B. mit alternierenden Seitenketten, herstellen.

Bei diesem mehrstufigen Verfahren setzt man in der ersten Stufe die Polyalkylenoxiddiole mit den organischen Diisocyanaten in einem molaren Verhältnis von 1: > 1 bis 1:2 und das erhaltene Zwischenprodukt in einer zweiten Stufe mit Polyalkylenoxiddiol in einem molaren Verhältnis von 1:2 bis 2:1 um und wiederholt gegebenenfalls mit diesem Verfahrensprodukt die Stufen 1 und/oder 2 bis zur Erzielung des gewünschten Molekulargewichtes.

Dabei kann man auch in der ersten und zweiten Verfahrensstufe Polyalkylenoxiddiole unterschiedlichen Aufbaus einsetzen.

In der ersten Verfahrensstufe entsteht somit ein Zwischenprodukt, welches durch Reaktion des Polyalkylenoxid-1,2-diols oder -1,3-diols mit mehr als einem, aber höchstens zwei Molekülen des organischen Diisocyanates gebildet ist und wobei die Isocyanatgruppen die kettenendbegrenzenden Gruppen sind.

Dieses Zwischenprodukt wird nun in der zweiten Stufe mit weiterem Polyalkylenoxiddiol umgesetzt. Erfolgt die Umsetzung mit einem molaren

Überschuss des Polyalkylenoxiddiols, erhält man ein Polymerisat mit endständigen OH-Gruppen. Verwendet man einen molaren Unterschuss an Polyalkylenoxiddiol, weist das entstehende Polymerisat endständig Isocyanatgruppen auf.

Weist das Endprodukt des zweistufigen Verfahrens als endbegrenzende Gruppen OH-Gruppen auf, kann man nun die Stufe 1 und gegebenenfalls die Stufe 2 wiederholen, bis das gewünschte Molekulargewicht erreicht ist.

Weist das Endprodukt des zweistufigen Verfahrens als endbegrenzende Gruppen Isocyanatgruppen auf, kann man die zweite Stufe des erfindungsgemässen Verfahrens wiederholen, um dann gegebenenfalls erneut die Stufe 1 und gegebenenfalls die Stufe 2 zu wiederholen. Diese Verfahrensweisen lassen sich, durch Symbole vereinfacht, wie folgt darstellen:

Für das in der ersten Stufe erhaltene Zwischenprodukt kann man das Symbol

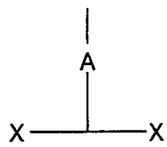


IV

oder

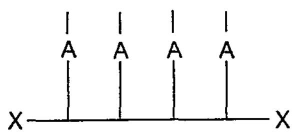


V

wählen. Mit X sind die Isocyanatgruppen symbolisiert. Die seitenständige Polyalkylenoxidkette entspricht dem Symbol

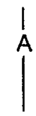


Produkte der Formel IV entstehen, wenn Polyalkylenoxiddiole mit den organischen Diisocyanaten in einem molaren Verhältnis von 1:2 umgesetzt werden. Produkte der Formel V entstehen in einem Molbereich von 1: > 1 bis 1: < 2.

Führt man in der zweiten Stufe die Reaktion dieser Zwischenverbindungen IV oder V mit Polyalkylenoxiddiolen in einem molaren Verhältnis von 1: > 1 bis 1:2 durch, erhält man Polymerisate etwa folgenden Aufbaus

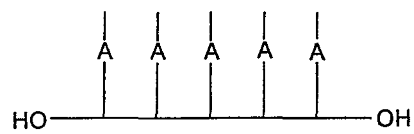


VI

Bei einem umgekehrten molaren Verhältnis der Reaktionspartner treten an die Stelle der endständigen OH-Gruppen die reaktiven Gruppen X.

Wiederholt man die Stufen 1 oder 2, erhält man Produkte entsprechend höheren Molekulargewichts, d.h., grösserer Kettenlänge.

Verwendet man in den Stufen 1 und 2 unterschiedliche Polyalkylenoxiddiole, die man wie folgt symbolisch darstellen kann

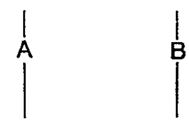


erhält man ausgehend von dem Zwischenprodukt IV und bei Verwendung eines anderen Polyalkylenoxiddiols Polymerisate folgenden Aufbaus

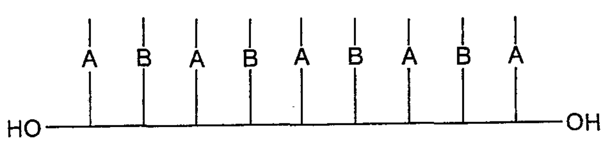


VII

wobei wiederum bei Einhaltung eines entsprechenden Molverhältnisses der Reaktionspartner an die Stelle der OH-Gruppen Isocyanatgruppen des organischen Diisocyanates treten können.

Es ist dabei von besonderer Bedeutung, dass man diese alternierend aufgebauten Polymerisate auch dann erhält, wenn die Reaktivität der Hydroxylgruppen der verschiedenen Polyalkylenoxiddiole unterschiedlich ist.

Setzt man ein Gemisch unterschiedlicher Diole mit organischen Diisocyanaten um, erhält man Polymerisate mit statistischer Verteilung, z.B.

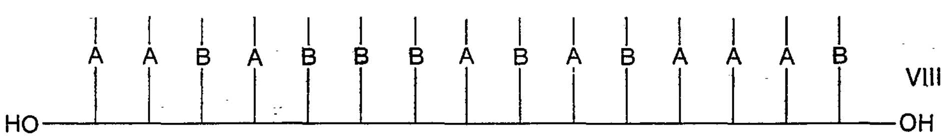


VIII

Geht man von der Zwischenverbindung V aus, erhält man entsprechend kammartige Blockcopolymerisate, z.B. folgenden Aufbaus

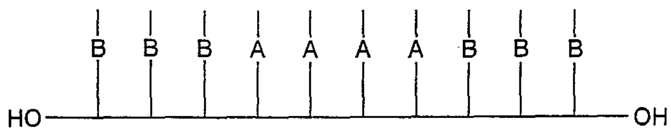

IX

Die erfindungsgemäss hergestellten Verbindungen zeigen ein ausgeprägtes grenzflächenaktives Verhalten. Sie sind sehr wirkungsvolle Tenside, deren hydrophiles/hydrophobes Verhältnis beliebig variiert und eingestellt werden kann. Je nach Aufbau sind sie sowohl zur Stabilisierung als auch zur Zerstörung von Schäumen, zur Stabilisierung und zur Destabilisierung von Emulsionen und Dispersionen geeignet. Sie können ferner als Verlaufsmittel für Lacke sowie als niedrigviskose Schmierstoffe verwendet werden. Sie sind ferner als Trennmittel, Flokkulierungsmittel, Flotationsmittel, Dispergierhilfsmittel, insbesondere für Pigmente und Füllstoffe, und Textilveredlungsmittel geeignet.

Da die erfindungsgemässen Verbindungen jeweils am Kettenende noch Hydroxylgruppen aufweisen, sind sie weiteren Reaktionen und Modifikationen zugänglich und bilden deshalb wertvolle Ausgangsprodukte, z.B. für die Polyurethanverschäumung, als reaktive Komponenten für Dichtungsmassen sowie zur Herstellung von Lackrohstoffen und gesättigten oder ungesättigten Polyesterharzen.

Das erfindungsgemässe Verfahren wird durch die folgenden Beispiele noch näher erläutert.

Beispiel 1

A) Anlagerung eines Ethylenoxid/Propylenoxid-Gemisches

In 132 g (ca. 1 Mol) 2,2-Dimethyl-4-hydroxymethyl-1,3-dioxolan werden bei 80 °C 7 g Kaliummethylat in einem Reaktor mit einem zwangsfördernden Umlaufsystem in Lösung gebracht. Nach sorgfältiger Spülung mit Reinstickstoff wird der Reaktor auf 110 °C geheizt und ein Gemisch aus 458 g (ca. 10,4 Mol) Ethylenoxid und 151 g (ca. 2,6 Mol) Propylenoxid so schnell zugegeben, dass die Reaktorinnentemperatur einen Wert von 120 °C und der Druck einen Wert von 3 bar nicht überschreiten. Nach vollständiger Einleitung des Ethylenoxidgemisches wird die Temperatur solange auf 120 °C gehalten, bis ein gleichbleibender Druck das Ende der Nachreaktion anzeigt; danach wird bei 80 bis 90 °C unter Vakuum die Entfernung von Restmonomeren vorgenommen. Anschliessend werden 20 g Wasser bei 80 °C eingerührt und dann 14 g 30%ige Phosphorsäure zugegeben, es wird 0,25 h gerührt und mit $NaH_2PO_4$ auf einen pH-Wert von 7 eingestellt. Schliesslich wird das Wasser bei 80 bis 90 °C in einem Vakuum von 13,3 mbar abdestilliert und das Produkt mit 10 g eines Filterhilfsmittels auf Silikatbasis abfiltriert.

Die Hydroxylzahl des farblosen, klaren Produktes beträgt 79,7 ($\hat{=}$ $M_n$ = 704).

B) Blockierung

704 g (1 Mol) des unter A) erhaltenen Polyethylenoxids werden nach Zugabe von 0,8 g Dibutylzinndilaurat und 0,8 g Triethylendiamin unter Reinstickstoff auf 80 °C erwärmt. Sodann werden 104 g (ca. 1,05 Mol) n-Butylisocyanat zugetropft. Nach der vollständigen Zugabe erfolgt für 6 h bei 90 °C eine Nachreaktion. Das erhaltene Produkt ist klar und leicht gelblich gefärbt. Der NCO-Gehalt beträgt 0,05%, die Hydroxylzahl 1,2.

C) Spaltung des Acetalringes

Der gemäss B) hergestellte Polyether wird im Gewichtsverhältnis 2:1:1 mit 1 n wässriger Salzsäure und Ethanol vermischt und für 4 h bei 80 °C unter Rückfluss erhitzt. Nach Beendigung der Reaktion werden alle flüchtigen Bestandteile im Bereich von 70 bis 80 °C bei einem Vakuum von 13,3 mbar abdestilliert; Restmengen an Wasser werden azeotrop mit Toluol entfernt.

Die Hydroxylzahl des erhaltenen klaren, leicht gelblichen Produktes beträgt 147, was bei einer angenommenen Funktionalität von 2 einem Molekulargewicht von 763 entspricht (allgemeine Formel II).

$D_1$) Intermolekulare Verknüpfung (erfindungsgemäss, einstufig)

In 200 g (ca. 0,9 Mol) Isophorondiisocyanat werden 0,9 g Triethylendiamin und 0,9 g Dibutylzinndilaurat gelöst und die Mischung auf 90 °C erhitzt. Dazu werden unter Rühren in einer Reinstickstoffatmosphäre 763 g (ca. 1 Mol) des gemäss Beispiel 1 C) erhaltenen Polyetherdiols gegeben. Die Mischung wird für weitere 7 h erhitzt.

Das erhaltene Produkt ist flüssig, klar und leicht gelblich gefärbt; die Hydroxylzahl beträgt 15,8, was bei einer angenommenen Funktionalität von 2 einem Molekulargewicht von 7100 entspricht. Das erhaltene Produkt entspricht dem Verbindungstyp VI.

$D_2$) Intermolekulare Verknüpfung (erfindungsgemäss, zweistufig)

Stufe 1:

In 444 g (ca. 2 Mol) Isophorondiisocyanat werden 1,2 g Triethylendiamin und 1,2 g Dibutylzinndilaurat gelöst. In diese auf 90 °C erhitzte Lösung werden unter Rühren in einer Reinstickstoffatmosphäre über 2 h tropfenweise 763 g (ca. 1 Mol) des Polyetherdiols aus Beispiel 1C) gegeben. Danach wird bei 90 °C für 6 h nachreagiert. Der Isocyanatgehalt beträgt 7%, was einer nahezu theoretischen Ausbeute entspricht. Das erhaltene Produkt entspricht der allgemeinen Formel IV.

Stufe 2:

In 966 g (ca. 0,8 Mol) des erhaltenen Polyetherdiisocyanats werden 1,8 g Triethylendiamin und 1,8 g Dibutylzinndilaurat gelöst. Diese Lösung wird unter Rühren in einer Reinstickstoffatmosphäre über 2 h zu 763 g (ca. 1 Mol) des auf 90 °C erhitzten Polyetherdiols aus Beispiel 1 C) gegeben; danach wird für 6 h bei 90 °C nachreagiert.

Das erhaltene Produkt ist flüssig, hochviskos, klar und leicht gelblich gefärbt; die Hydroxylzahl beträgt 13,6, was bei einer angenommenen Funktionalität von 2 einem Molekulargewicht von 8240 entspricht. Das erhaltene Produkt entspricht dem Verbindungstyp VI. Sollen die endständigen Hydroxylgruppen blockiert werden, schliesst sich die Stufe E) an.

E) Endgruppenblockierung

In 820 g (ca. 0,1 Mol) des in 1$D_2$) erhaltenen Produktes werden unter Rühren in einer Reinstickstoffatmosphäre bei 90 °C 0,85 g Dibutylzinndilaurat und 0,2 g Triethylendiamin gelöst in 0,8 g Aceton gegeben und danach über 0,5 h 24 g (ca. 0,22 Mol) n-Butylisocyanat zugetropft. Es wird anschliessend für ca. 8 h bei 90 °C nachreagiert.

Das erhaltene Produkt hat eine Hydroxylzahl von ca. 0,8, was einem Restgehalt von ca. 6% Hydroxylgruppen entspricht.

Beispiel 2

A) Anlagerung von Propylenoxid

In 132 g (ca. 1 Mol) 2,2-Dimethyl-4-hydroxymethyl-1,3-dioxolan werden mit einem scherkraftreichen Rührer 1,5 g $Zn_3$ [$CO(CN)_6$], komplexiert mit Dimethylglykol, dispergiert. Das Gemisch wird in einen Reaktor mit einem zwangsfördernden Umlaufsystem gebracht. Danach wird verfahren wie in Beispiel 1 A), wobei 602 g (10,4 Mol) Propylenoxid angelagert werden.

Nach Beendigung der Reaktion wird die Entfernung der Restmonomeren vorgenommen und der Katalysator weitgehend durch Filtration entfernt.

Die Hydroxylzahl des bläulichen, leicht getrübten Produktes beträgt 79,6, was bei einer angenommenen Funktionalität von 1 einem Molekulargewicht von 705 entspricht.

B) Blockierung

705 g (ca. 1 Mol) des unter A) erhaltenen Polypropylenoxids werden nach Abtrennung des Katalysators und nach Zugabe von 0,8 g Dibutylzinndilaurat und 0,8 g Triethylendiamin unter Reinstickstoff auf 80 °C erwärmt. Sodann werden 104 g (ca. 1,05 Mol) n-Butylisocyanat zugetropft. Nach der vollständigen Zugabe erfolgt für 6 h bei 90 °C eine Nachreaktion.

Das erhaltene Produkt ist leicht getrübt und leicht gelblich gefärbt. Der NCO-Gehalt beträgt 0,12%, die Hydroxylzahl 1,2.

C) Spaltung des Ketals

Der gemäss 3B) hergestellte Polyether wird gemäss Beispiel 1C) behandelt.

Die Hydroxylzahl des Produktes beträgt 153, was bei einer angenommenen Funktionalität von 2 einem Molekulargewicht von 733 entspricht (allgemeine Formel I).

$D_1$) Intermolekulare Verknüpfung (erfindungsgemäss, einstufig)

In 177,6 g (ca. 0,8 Mol) Isophorondiisocyanat werden 0,9 g Triethylendiamin und 1,9 g Dibutylzinndilaurat gelöst und die Mischung auf 90 °C erhitzt. Dazu werden unter Rühren und in einer Reinstickstoffatmosphäre 733 g (ca. 1 Mol) des gemäss 2C) erhaltenen Polyetherdiols gegeben. Die Mischung wird für weitere 8 h erhitzt.

Das erhaltene Produkt des Typs VI ist trübe und leicht gelblich gefärbt; die Hydroxylzahl beträgt 31, was bei einer angenommenen Funktionalität von 2 einem Molekulargewicht von 3620 entspricht.

$D_2$) Intermolekulare Verknüpfung (erfindungsgemäss, zweistufig unter Verwendung des Zwischenproduktes aus Beispiel 1$D_2$) als erste Stufe)

In 1207 g (ca. 1 Mol) des in Beispiel 1 $D_2$) erhaltenen Polyetherdiisocyanats werden 2,1 g Triethylendiamin und 2,1 g Dibutylzinndilaurat gelöst. Diese Lösung wird unter Rühren in einer Reinstickstoffatmosphäre über 2 h zu 916 g (ca. 1,25 Mol) des auf 90 °C erhitzten Polyetherdiols von 3C) gegeben; danach wird für 6 h bei 90 °C nachreagiert.

Das erhaltene Produkt ist flüssig, hochviskos, leicht trübe und leicht gelblich gefärbt; die Hydroxylzahl beträgt 14,6, was bei einer angenommenen Funktionalität von 2 einem Molekulargewicht von 7685 entspricht. Das erhaltene Produkt entspricht dem Verbindungstyp VII.

Beispiel 3

Intermolekulare Verknüpfung (erfindungsgemäss)

In 400 g (ca. 1,8 Mol) Isophorondiisocyanat werden 2,4 g Triethylendiamin und 2,4 g Dibutylzinndilaurat gelöst und die Mischung auf 90 °C erhitzt. Dazu wird unter Rühren in einer Reinstickstoffatmosphäre über 2 h eine Mischung aus 763 g (ca. 1 Mol) des Polyetherdiols aus Beispiel 1C) und 733 g (ca. 1 Mol) des Polyetherdiols aus Beispiel 2C) gegeben; danach wird für weitere 8 h erhitzt.

Das erhaltene Produkt ist flüssig, leicht trübe und leicht gelblich gefärbt; die Hydroxylzahl beträgt 19,6, was bei einer angenommenen Funktionalität von 2 einem Molekulargewicht von 5725 entspricht (allgemeine Formel VIII).

Beispiel 4

Intermolekulare Verknüpfung (erfindungsgemäss, mehrstufig)

In 166,5 g (ca. 0,75 Mol) Isophorondiisocyanat werden 0,9 g Triethylendiamin und 0,9 g Dibutylzinndilaurat gelöst und die Mischung auf 90 °C erhitzt. Dazu werden unter Rühren in einer Reinstickstoffatmosphäre über 2 h 763 g (ca. 1 Mol) des Polyetherdiols aus Beispiel 1 C) gegeben. Die Mischung wird für weitere 6 h erhitzt.

Die Hydroxylzahl des erhaltenen Produktes (Polyether I) beträgt 37,2, was bei einer angenommenen Funktionalität von 2 einem Molekulargewicht von 3010 entspricht.

In 166,5 g (ca. 0,75 Mol) Isophorondiisocyanat werden 0,9 g Triethylendiamin und 0,9 g Dibutylzinndilaurat gelöst und die Mischung auf 90 °C erhitzt. Dazu werden unter Rühren in einer Reinstickstoffatmosphäre über 2 h 735 g (ca. 1 Mol) des Polyetherdiols aus Beispiel 2 C) gegeben. Die Mischung wird für weitere 6 h erhitzt.

Die Hydroxylzahl des erhaltenen Produktes (Polyether II) beträgt 38,4, was bei einer angenommenen Funktionalität von 2 einem Molekulargewicht von 2922 entspricht.

In 44 g (ca. 0,2 Mol) Isophorondiisocyanat werden 7,5 g Triethylendiamin und 7,5 g Dibutylzinndilaurat gelöst. Diese Lösung wird unter Rühren in einer Reinstickstoffatmosphäre in ein Gemisch von 602 g (ca. 0,2 Mol) des Polyetherdiols I und 584 g (ca. 0,2 Mol) des Polyetherdiols II, das auf 90 °C erhitzt wird, gegeben. Die Mischung wird für 9 h bei 90 °C zur Reaktion gebracht.

Das erhaltene Produkt ist hochviskos, leicht getrübt und leicht gelblich gefärbt; die Hydroxylzahl beträgt 22,7, was bei einer angenommenen Funktionalität von 2 einem Molekulargewicht von 4950 entspricht. Das erhaltene Copolymerisat ist ein Blockcopolymerisat in der Art der Formel IX.

Beispiel 5

1. Herstellung des Polymerblocks A mit endbegrenzenden Isocyanatgruppen entsprechend Stufe 1 des erfindungsgemässen Verfahrens

1810 g (ca. 1,5 Mol) des gemäss Beispiel 1 $D_2$) 1. Stufe hergestellten Polyetherdiisocyanats werden gemäss Beispiel 1 $D_2$) 2. Stufe in Gegenwart von 3 g Triethylendiamin und 3 g Dibutylzinndilaurat mit 763 g (ca. 1 Mol) des gemäss Beispiel 1 C) erhaltenen Polyetherdiols umgesetzt.

2. Herstellung des Polymerblocks B mit endbegrenzenden Hydroxylgruppen als Reaktionspartner für den Polymerblock A zur Durchführung der zweiten Stufe des erfindungsgemässen Verfahrens

Gemäss Beispiel 1 $D_2$) 1. Stufe wird durch Umsetzung von 733 g (ca. 1 Mol) des in Beispiel 2C) erhaltenen Polyethers mit 444 g (ca. 2 Mol) Isophorondiisocyanat ein Polydiisocyanat erhalten. 1177 g (ca. 1 Mol) dieses Produktes werden gemäss Beispiel 1 $D_2$) 2. Stufe in Gegenwart von 2,6 g Triethylendiamin und 2,6 g Dibutylzinndilaurat mit 1466 g (ca. 2 Mol) des aus Beispiel 2 C) erhaltenen Polyetherdiols umgesetzt.

3. Durchführung der Stufe 2 des erfindungsgemässen Verfahrens

In 1227 g (ca. 0,25 Mol) des gemäss 1. erhaltenen Polymerblocks A werden 2,9 g Triethylendiamin und 2,9 g Dibutylzinndilaurat gelöst. Diese Lösung wird auf 90 °C erhitzt und dazu unter Rühren in einer Reinstickstoffatmosphäre 1215 g (ca. 0,5 Mol) des gemäss 2. erhaltenen Polymerblocks B über 3 h gegeben und die Mischung für 9 h auf 90 °C erhitzt.

Das erhaltene Produkt ist flüssig, hochviskos, leicht trübe und leicht gelblich gefärbt; die Hydroxylzahl beträgt 11,0, was bei einer angenommenen Funktionalität von 2 einem Molekulargewicht von 10 200 entspricht. Das erhaltene Produkt entspricht dem Verbindungstyp IX.

**Patentansprüche**

1. Verfahren zur Herstellung von Polymerisaten mit seitenständig gebundenen Polyalkylenoxidketten, dadurch gekennzeichnet, dass man Polyalkylenoxide mit mindestens zwei freien Hydroxylgruppen am Startalkohol, wobei die Hydroxylgruppen durch höchstens drei Kohlenstoffatome voneinander getrennt sind und wobei die am abgewendeten Ende der Polyalkylenoxidkette befindliche Hydroxylgruppe, gegebenenfalls reversibel, blockiert ist, mit organischen Di- oder Polyisocyanaten, gegebenenfalls in Gegenwart von Lösungsmitteln und/oder Katalysatoren und/oder bei erhöhten Temperaturen, umsetzt.

2. Verfahren nach Anspruch 1, dadurch gekennzeichnet, dass man als Polyalkylenoxide mit mindestens zwei Hydroxylgruppen Verbindungen der allgemeinen Formel

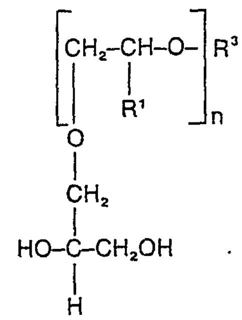

wobei

$R^1$ ein Wasserstoffrest oder eine, gegebenenfalls halogenierte, Kohlenwasserstoffgruppe mit 1 bis 30 Kohlenstoffatomen oder die Gruppe $-CH_2OR^2$, in der $R^2$ eine Alkyl- oder Alkenylgruppe bedeutet, und wobei innerhalb des polymeren Moleküls die Gruppe $R^1$ gleich oder verschieden ist,

$R^3$ eine, gegebenenfalls wieder abspaltbare, Schutzgruppe und

n eine ganze Zahl $> 1$ ist,

verwendet.

3. Verfahren nach Anspruch 1, dadurch gekennzeichnet, dass man als Polyalkylenoxide mit mindestens zwei Hydroxylgruppen Verbindungen der allgemeinen Formel

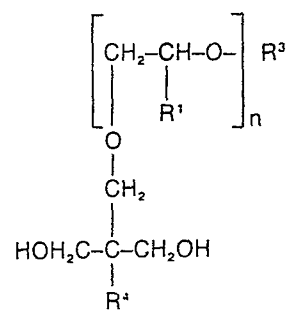

wobei

$R^1$, $R^3$ und n die bereits angegebene Bedeutung haben, und

$R^4$ ein Wasserstoffrest, eine Alkyl- oder Arylgruppe ist,

verwendet.

4. Verfahren nach Anspruch 1, dadurch gekennzeichnet, dass man als Polyalkylenoxide mit mindestens zwei Hydroxylgruppen Verbindungen der allgemeinen Formel

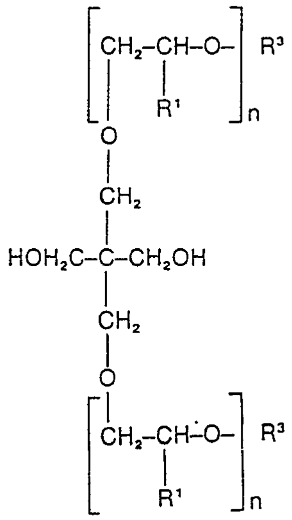

wobei

$R^1$, $R^3$ und n die oben angegebene Bedeutung haben,

verwendet.

5. Verfahren nach einem oder mehreren der vorhergehenden Ansprüche, dadurch gekennzeichnet, dass man bis zu 90 Mol-% der Polyalkylenoxide mit mindestens zwei freien Hydroxylgruppen am Startalkohol durch in bezug auf die Hydroxylgruppen äquivalente Mengen von di- oder polyfunktionellen Alkoholen ersetzt.

6. Verfahren nach einem oder mehreren der vorhergehenden Ansprüche, dadurch gekennzeichnet, dass man Gemische verschiedener Polyalkylenoxide mit den organischen Diisocyanaten umsetzt.

7. Verfahren nach einem oder mehreren der Ansprüche 1 bis 5, dadurch gekennzeichnet, dass man voneinander verschiedene Polyalkylenoxide nacheinander mit den organischen Diisocyanaten umsetzt.

8. Verfahren nach einem oder mehreren der Ansprüche 1 bis 6, dadurch gekennzeichnet, dass man die Reaktion in mindestens zwei Stufen durchführt, indem man in der ersten Stufe die Polyalkylenoxiddiole mit den organischen Diisocyanaten in einem molaren Verhältnis von 1: > 1 bis 1:2 umsetzt und das erhaltene Zwischenprodukt in einer zweiten Stufe mit Polyalkylenoxiddiol in einem molaren Verhältnis von 1:2 bis 2:1 umsetzt und gegebenenfalls mit diesem Verfahrensprodukt die Stufen 1 und/oder 2 bis zur Erzielung des gewünschten Molekulargewichtes wiederholt.

9. Verfahren nach Anspruch 8, dadurch gekennzeichnet, dass man in der ersten und zweiten Verfahrensstufe Polyalkylenoxiddiole unterschiedlichen Aufbaus umsetzt.

## Claims

1. Process for the preparation of polymers having laterally bonded polyalkylene oxide chains, characterised in that polyalkylene oxides having at least two free hydroxyl groups on the starting alcohol, the hydroxyl groups being separated from one another by at most three carbon atoms and the hydroxyl group located at the opposite end of the polyalkylene oxide chain being blocked, if appropriate reversibly, are reacted with organic diisocyanates or polyisocyanates, if appropriate in the presence of solvents and/or catalysts and/or at elevated temperatures.

2. Process according to Claim 1, characterised in that as polyalkylene oxides having at least two hydroxyl groups there are used compounds of the general formula

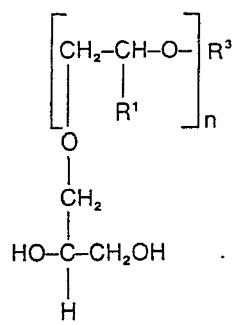

wherein

$R^1$ is a hydrogen radical or an optionally halogenated hydrocarbon group with 1 to 30 carbon atoms or is the group $-CH_2OR^2$, in which $R^2$ denotes an alkyl or alkenyl group, the group $R^1$ within the polymeric molecule being identical or different,

$R^3$ is a protective group which, if appropriate, can be cleaved off again and

n is an integer greater than 1.

3. Process according to Claim 1, characterised in that as polyalkylene oxides having at least two hydroxyl groups there are used compounds of the general formula

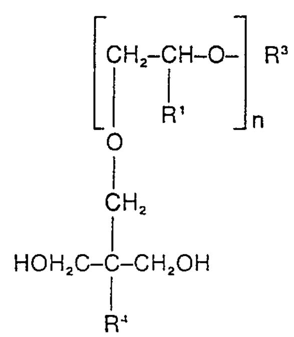

wherein

$R^1$, $R^3$ and n have the meaning already given and

$R^4$ is a hydrogen radical or an alkyl or aryl group.

4. Process according to Claim 1, characterised in that as polyalkylene oxides having at least two hydroxyl groups there are used compounds of the general formula

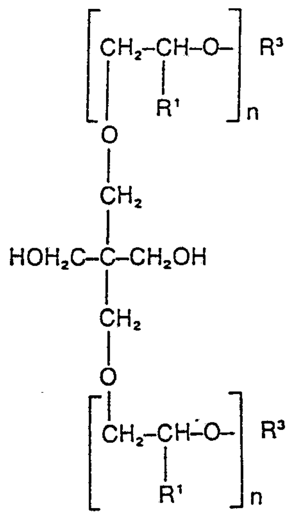

wherein

$R^1$, $R^3$ and n have the abovementioned meaning.

5. Process according to one or more of the preceding Claims, characterised in that up to 90 mole% of the polyalkylene oxides having at least two free hydroxyl groups on the starting alcohol are replaced by equivalent quantities, in respect of hydroxyl groups, of difunctional or polyfunctional alcohols.

6. Process according to one or more of the preceding Claims, characterised in that mixtures of different polyalkylene oxides are reacted with the organic diisocyanates.

7. Process according to one or more of Claims 1 to 5, characterised in that polyalkylene oxides differing from one another are reacted successively with the organic diisocyanates.

8. Process according to one or more of Claims 1 to 6, characterised in that the reaction is carried out in at least two stages, in that in the first stage the polyalkylene oxide diols are reacted with the organic diisocyanates in a molar ratio of 1:1 to 1:2 and, in a second stage, the resulting intermediate is reacted with polyalkylene oxide diol in a molar ratio of 1:2 to 2:1 and, if appropriate, stages 1 and/or 2 are repeated with this product of the process until the desired molecular weight is attained.

9. Process according to Claim 8, characterised in that polyalkylene oxide diols of different structure are reacted in the first and second process stage.

**Revendications**

1. Procédé pour la préparation de polymères possédant des chaînes polyoxyalkylénées latérales caractérisé en ce qu'on fait réagir des poly(oxydes d'alkylène) possédant au moins deux groupes hydroxyle terminaux sur l'alcool de départ, les groupes hydroxyle étant séparés les uns des autres par au plus trois atomes de carbone, le groupe hydroxyle se trouvant à l'extrémité opposée de la chaîne polyoxyalkylénée étant bloqué, d'une manière réversible, sur des di- ou polyisocyanates organiques, éventuellement en présence de solvants et/ou de catalyseurs et/ou à hautes températures.

2. Procédé selon la revendication 1, caractérisé en ce qu'on utilise en tant que poly(oxydes d'alkylène) ayant au moins deux groupes hydroxyle des composés de formule générale

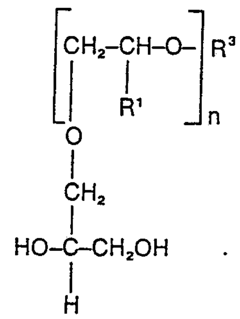

dans laquelle

$R^1$ est un résidu hydrogène ou un groupe hydrocarboné éventuellement halogéné ayant de 1 à 30 atomes de carbone, ou le groupe $-CH_2OR^2$, dans lequel $R^2$ est un groupe alkyle ou alcényle, le groupe $R^1$, à l'intérieur de la molécule polymère, étant identique ou différent,

$R^3$ est un groupe protecteur, pouvant éventuellement être de nouveau éliminé, et

n est un nombre entier supérieur 1.

3. Procédé selon la revendication 1, caractérisé en ce qu'on utilise en tant que poly(oxydes d'alkylène) ayant au moins deux groupes hydroxyle des composés de formule générale

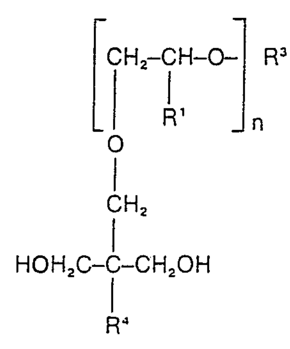

dans laquelle

$R^1$, $R^3$ et n ont la signification donnée ci-dessus, et

$R^4$ est un résidu hydrogène, un groupe alkyle ou aryle.

4. Procédé selon la revendication 1, caractérisé en ce qu'on utilise en tant que poly(oxydes d'alkylène) ayant au moins deux groupes hydroxyle des composés de formule générale

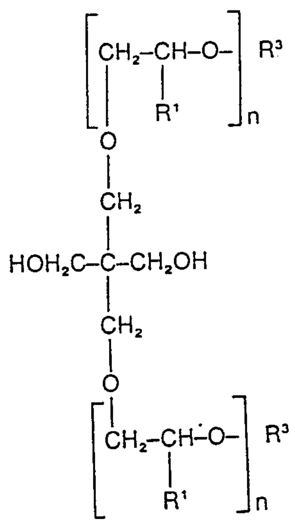

dans laquelle

$R^1$, $R^3$ et n ont la signification donnée ci-dessus.

5. Procédé selon une ou plusieurs des revendications 1 à 4, caractérisé en ce qu'on remplace jusqu'à 90%-molaire des poly(oxydes d'alkylène) ayant au moins 2 groupes hydroxyle libres sur l'alcool de départ par des quantités équivalentes, par rapport aux groupes hydroxyle, de di- ou polyalcools.

6. Procédé selon une ou plusieurs des revendications 1 à 5, caractérisé en ce qu'on fait réagir des mélanges de différents poly(oxydes d'alkylène) sur les diisocyanates organiques.

7. Procédé selon une ou plusieurs des revendications 1 à 5, caractérisé en ce qu'on fait réagir les uns après les autres des poly(oxydes d'alkylène) différents les uns des autres, sur les diisocyanates organiques.

8. Procédé selon une ou plusieurs des revendications 1 à 6, caractérisé en ce qu'on réalise la réaction en au moins deux étapes, en faisant réagir au cours de la première étape les poly(oxydes d'alkylène)-diols sur les diisocyanates organiques selon un rapport molaire de 1: > 1 à 1:2, et en faisant réagir le produit intermédiaire obtenu, dans une deuxième étape, sur un poly(oxyde d'alkylène)-diol selon un rapport molaire de 1:2 à 2:1, et éventuellement en répétant avec ce produit les étapes 1 et/ou 2 jusqu'à obtention de la masse moléculaire voulue.

9. Procédé selon la revendication 8, caractérisé en ce que, dans la première et la deuxième étape du procédé, on fait réagir des poly(oxydes d'alkylène)-diols présentant des constitutions différentes.